# EUROPÄISCHE PATENTSCHRIFT

(11) **EP 4 281 524 B1**
(45) Veröffentlichungstag und Bekanntmachung des Hinweises auf die Patenterteilung: **19.03.2025**
(21) Anmeldenummer: 22701048.5
(22) Anmeldetag: 18.01.2022
(51) Int. Cl.: C10J 3/56, C10B 49/10, C10J 3/50, C10J 3/54, C10J 3/72

(54) **VORRICHTUNG ZUM VERWERTEN VON PROZESSGAS UNTER UMSETZUNG VON ALTSTOFFEN UND BILDUNG VON SYNTHESEGAS**
DEVICE FOR UTILISING PROCESS GAS WHEN CONVERTING WASTE MATERIALS AND FORMING SYNTHESIS GAS
DISPOSITIF D'UTILISATION DE GAZ DE TRAITEMENT LORS DE LA CONVERSION DE DÉCHETS ET FORMATION DE GAZ DE SYNTHÈSE

(30) Priorität: 19.01.2021 AT 102021
(43) Veröffentlichungstag der Anmeldung: 29.11.2023
(73) Patentinhaber: Radmat AG, 5442 Fislisbach (CH)
(72) Erfinder: EDLINGER, Alfred, 6781 Bartholomäberg (AT)
(74) Vertreter: SONN Patentanwälte GmbH & Co KG
(86) Internationale Anmeldenummer: PCT/IB2022/050375
(87) Internationale Veröffentlichungsnummer: WO 2022/157619

(56) Entgegenhaltungen:
- EP-A1- 0 139 092
- US-A- 4 400 181
- US-A1- 2010 281 878
- US-A1- 2020 017 770

## Beschreibung

Die vorliegende Erfindung betrifft eine Vorrichtung zum Verwerten von Prozessgas unter Umsetzung von Altstoffen und Bildung von Synthesegas sowie ein entsprechendes Verfahren. Insbesondere zielt die vorliegende Erfindung auf die Maximierung der H₂-Gewinnung (Wasserstoffgas-Gewinnung) bei der Bildung von Synthesegas ab.

Chemisch belastete Feststoffpartikel wie Stäube, Trockenschlämme und Schlämme aus der chemischen Industrie, der Metallurgie, der Landwirtschaft, der kommunalen und industriellen Entsorgungswirtschaft etc. und insbesondere Verbrennungsstäube, Schleifstäube, Stahlwerksstäube, Klärschlamm, Tiermehl, Shredder-Leichtfraktion, Altholz, Batterieschrott, Altplastik, Altlösungsmittel und dergleichen, stellen aufgrund des hohen anorganischen und organischen Schadstoffgehalts sowie der großen spezifischen Oberfläche und des hohen chemischen Reaktionspotentials mit der Umwelt ein großes umweltrelevantes Problem dar. Die Aufarbeitung der kleinen Feststoffpartikel ist Gegenstand verschiedenster Technologien. Die Anmelderin der vorliegenden Erfindung hat hierzu kürzlich in der österreichischen Patentanmeldung A 277/2020 eine Vorrichtung vorgeschlagen, die ein Gehäuse und in dem Gehäuse einen mit Feuerfestmaterial ausgekleideten Brennraum aufweist, wobei an einem ersten axialen Ende des Gehäuses eine axiale Eintrittsöffnung in das Gehäuse vorgesehen ist, mit der eine einen Speicherraum für die Feststoffpartikel aufweisende Aufgabevorrichtung mit einer Abgabeöffnung für die Feststoffpartikel verbunden ist, wobei eine Lanze zum Einstoßen von Gasen und/oder Aerosolen in den Brennraum die Eintrittsöffnung axial durchsetzt und axial in den Brennraum eintaucht, und wobei die Lanze durch eine Ummantelung vom Speicherraum abgetrennt ist, wobei sich die Ummantelung in den Brennraum und über den in den Brennraum eintauchenden Bereich der Lanze erstreckt. Beim Betrieb dieser Vorrichtung entsprechend dem ebenfalls in dieser Anmeldung vorgeschlagenen Verfahren, werden gasförmige und/oder feststoffliche Reaktionsprodukte abgezogen und feststoffliche Reaktionsprodukte von gasförmigen Reaktionsprodukten in einem Zyklonabscheider abgetrennt. Weiters ist es vorgesehen, dass das Prozessgas zur Kühlung mit Holz in Kontakt und zur Reaktion gebracht wird und dabei gebildete, mit anhaftenden Reaktionsprodukten beladene Holzkohle- und/oder Holzaschepartikel der nichteisenmetallurgischen Aufarbeitung zugeführt werden.

Das genannte Prozessgas, das gemäß der vorliegenden Erfindung verwertet beziehungsweise umgesetzt werden soll, fällt bei den in Betracht gezogenen Verfahren und Vorrichtungen bei einer Temperatur von ungefähr 1600°C bis 1800°C an und besteht im Wesentlichen aus CO₂ und H₂O und enthält gegebenenfalls Schwefel und Spuren von Schwermetallen, beispielsweise Zink, Kupfer, Cadmium, Eisen usw. sowie deren Verbindungen. Weiters können Alkalien, Erdalkalien, Halogene und Schwefeldioxid im Prozessgas enthalten sein. Die in Betracht gezogenen Vorrichtungen und Verfahren, bei denen das Prozessgas anfällt, auf das in der vorliegenden Anmeldung Bezug genommen wird, sind insbesondere weiters in den Anmeldungen WO 2018/122599 A1 und WO 03/070651 A1 offenbart. Ein analoges Prozessgas fällt auch bei der Verbrennung von Biogas mit O₂ an.

Die vorliegende Erfindung nimmt sich der Aufgabe an, Prozessgas, wie es beispielsweise in den oben beschriebenen und genannten Vorrichtungen und Verfahren gebildet wird, konsequent aufzuarbeiten, sowohl um den erheblichen Wärmeinhalt und stofflichen Inhalt des Prozessgases in Form von CO₂ und H₂O in ökologisch und ökonomisch sinnvoller Weise zu nutzen, als auch um unter Verwertung und Entsorgung von Altstoffen, wie beispielsweise Holzschnitzel, Biomasse, Müllfraktionen, Altkunststoffe, Altlösungsmittel, Shredder-Leichtfraktion, Altholz und dergleichen, Synthesegas bestehend im Wesentlichen aus H₂ und CO zu bilden, wodurch in der Folge chemisch verwertbares Wasserstoffgas (H₂) und CO₂ erhalten werden kann.

Die Patentschriften EP 0 139 092 A1 und US 4 400 181 A offenbaren Verfahren zur Vergasung von Kohle unter Verwendung von Reaktoren mit spezifischen Zuführmechanismen.

Zur Lösung dieser Aufgabe wird eine Vorrichtung zum Verwerten von Prozessgas unter Umsetzung von Altstoffen und Bildung von Synthesegas gemäß Anspruch 1 vorgeschlagen.

Die erfindungsgemäße Vorrichtung gestattet es auf diese Weise, umzusetzende beziehungsweise zu verwertende Altstoffe, insbesondere Holzschnitzel, Biomasse, Müllfraktionen, Altkunststoffe, Shredder-Leichtfraktion, Altholz und dergleichen, mit heißem Prozessgas durch Umströmen zu erhitzen, wodurch eine Pyrolyse und je nach Intensität der Erhitzung bereits eine teilweise Vergasung der Altstoffe in dem zumindest einen Förderrohr stattfindet. Die definierte Länge des zumindest einen Förderrohrs beträgt je nach der weiter unten beschriebenen, spezifischen Ausgestaltung zwischen 40 cm und 200 cm. Durch die Pyrolyse und gegebenenfalls die Teilvergasung bilden sich im Förderrohr aus den Altstoffen Gase, die dazu führen, dass die durch die Aufgabevorrichtung eingebrachten Altstoffe aufgelockert und explosionsartig aus dem Förderrohr hinaus und in das Steigrohr geschleudert werden. Die derart zerkleinerten Altstoffe geraten dadurch stückig und mit relativ großer Oberfläche in den Gasstrom des Prozessgases im Steigrohr, der das zumindest eine Förderrohr von unten mit hoher Geschwindigkeit umströmt und im Steigrohr weiter nach oben strömt und die zerkleinerten Altstoffe mitreißt. Hierdurch und durch die großen Wärmemengen, die vom Prozessgas zur Verfügung gestellt werden, werden die Altstoffe vollständig pyrolysiert und vergast beziehungsweise umgesetzt sowie das Prozessgas dabei abgekühlt. Die Vergasung der Altstoffe zu Synthesegas bestehend im Wesentlichen aus CO und H₂ kann grundsätzlich und abhängig von der Zusammensetzung der Altstoffe genügend Wärme für die endotherme Umsetzung des Prozessgases bestehend im Wesentlichen aus CO₂ und H₂O zu Synthesegas aus CO und H₂ liefern. Auf diese Weise werden aus Abgas (Prozessgas) und Altstoffen Wasserstoff und Kohlenmonoxid (Wassergas, auch bekannt als Synthesegas) gebildet, wodurch Altstoffe gewinnbringend entsorgt werden können und gleichzeitig die Abwärme verschiedenster Verbrennungsprozesse genutzt werden kann.

Um für eine besonders effiziente Wärmeübertragung in der Aufgabevorrichtung zu sorgen, ist die Aufgabevorrichtung bevorzugt von einer Mehrzahl von radial oder tangential in das Steigrohr ragenden Förderrohren gebildet, wobei die Förderrohre bevorzugt in Bezug auf die axiale Richtung schräg nach oben gerichtet sind. Gemäß dieser bevorzugten Ausführungsform ist somit als Aufgabevorrichtung eine Mehrzahl von Förderrohren vorgesehen, sodass sich bei einem bestimmten Durchsatz an Altstoffen geringere Mengen der Altstoffe in jedem einzelnen Förderrohr der Aufgabevorrichtung befinden. Dies führt zu einer schnelleren und intensiveren Erhitzung und damit zu einer sehr effizienten Pyrolyse und gegebenenfalls teilweisen Vergasung. Durch die bevorzugte Ausrichtung der Förderrohre schräg nach oben wird eine in Bezug auf die Strömungsrichtung des Prozessgases im Steigrohr vorteilhafte Einbringung der pyrolysierten Altstoffe in das Steigrohr bewirkt. Die definierte Länge der Förderrohre beträgt bei dieser bevorzugten Ausführungsform zwischen 40 cm und 120 cm.

Gemäß einer bevorzugten, alternativen Ausführungsform der vorliegenden Erfindung ist die Aufgabevorrichtung von einem an einem unteren Ende des Steigrohrs in axialer Richtung, insbesondere konzentrisch, in das Steigrohr ragenden Förderrohr gebildet. Diese Ausführungsform ist hinsichtlich der platzsparenden Bauform ohne von der Seite in das Steigrohr mündende Förderrohre und hinsichtlich der strömungsgünstigen Einbringung der pyrolysierten Altstoffe in das Steigrohr als vorteilhaft anzusehen. Darüberhinaus kann bei einem gewissen Durchmesser des Steigrohrs die definierte Länge, über die das Förderrohr in das Steigrohr ragt, länger als bei der vorbeschriebenen radialen oder tangentialen Konfiguration der Förderrohre sein, sodass wiederum eine sehr wirksame Wärmeübertragung auf die Altstoffe im Förderrohr erfolgt. Die definierte Länge der Förderrohre beträgt bei dieser bevorzugten Ausführungsform zwischen 40 cm und 200 cm. Das Förderrohr weist mit seinem offenen Ende bei dieser Ausführungsform direkt in die Richtung der Achse des Steigrohrs, sodass die aus dem Förderrohr ausgeworfenen, pyrolysierten Altstoffe in die Strömungsrichtung des Gasstroms des Prozessgases geworfen werden.

Die Förderung der Altstoffe durch das zumindest eine Förderrohr wird gemäß der vorliegenden Erfindung in apparativer Hinsicht dadurch bewerkstelligt, dass das zumindest eine Förderrohr an einem dem offenen Ende abgewandten Ende eine Fördervorrichtung in Form einer in dem Förderrohr angeordneten Förderschnecke, eines Kolbenschiebers und/oder einer Dickstrompumpe aufweist Die Art der Fördervorrichtung kann je nach der Art der Ausgangsstoffe gewählt werden, wobei es bevorzugt auch vorgesehen sein kann, dass die Fördervorrichtung an dem dem offenen Ende abgewandten Ende abnehmbar festgelegt ist, wodurch die Fördervorrichtung bei einer Änderung der zu verwertenden Altstoffe abgenommen und ausgetauscht werden kann.

Eine bevorzugte Ausführungsform der vorliegenden Erfindung sieht vor, dass das zumindest eine Förderrohr zum offenen Ende hin eine Aufweitung aufweist, wobei die Aufweitung bevorzugt konisch oder gekrümmt ist. Dies wird hinsichtlich der Vollständigkeit der Pyrolyse als vorteilhaft angesehen. Darüberhinaus werden bei dieser Variante der vorliegenden Erfindung bevorzugt besonders kleinteilige Altstofffraktionen aus der trichterartigen Aufweitung durch den Gasstrom des Prozessgases mitgerissen, sodass wiederum eine hohe Oberfläche für die Vergasungsreaktionen im Steigrohr zur Verfügung gestellt wird.

Bevorzugt weist das zumindest eine Förderrohr sich radial in das Innere des Förderrohrs erstreckende Lamellen auf. Diese bevorzugte Maßnahme dient zum besseren Eintrag der in das Steigrohr durch das Prozessgas eingebrachten Wärme auf die Altstoffe in dem zumindest einen Förderrohr, da die Lamellen geeignet sind, Wärme von der Oberfläche des Förderrohrs in das Innere des Förderrohrs zu leiten, um im Förderrohr innenliegende Altstoffregionen effizient zu erhitzen.

Zur besseren Wärmeübertragung in dem zumindest einen Förderrohr und für die Pyrolysevorgänge in dem zumindest einen Förderrohr ist die vorliegende Erfindung bevorzugt dahingehend weitergebildet, dass das zumindest eine Förderrohr einen axial gelagerten Rotor aufweist. Wenn sich radial in das Innere des Förderrohrs erstreckende Lamellen zusätzlich vorhanden sind, kann der Rotor innerhalb von sich radial in das Innere des Förderrohrs erstreckenden Lamellen oder in einem axialen Bereich des Förderrohrs unterhalb oder oberhalb des Bereichs der sich radial in das Innere des Förderrohrs erstreckenden Lamellen angeordnet sein. Der Rotor vermischt die Altstoffe im Förderrohr und bewirkt hierbei auch eine Zerkleinerung der Altstoffe, sodass der Bildung von Anbackungen im Inneren des Förderrohrs entgegengewirkt wird.

Gemäß einer bevorzugten Ausführungsform der vorliegenden Erfindung weist das zumindest eine Förderrohr eine feuerfeste Ummantelung auf, wodurch die Lebensdauer des zumindest einen Förderrohrs im anfangs um 1700°C heißen Prozessgasstrom innerhalb des Steigrohrs erheblich gesteigert wird.

Abhängig von der Art der Altstoffe kann es notwendig sein, zusätzlich Sauerstoff für die Vergasung der Altstoffe zu Synthesegas aus CO und H₂ und für die gleichzeitige endotherme Umsetzung des Prozessgases bestehend im Wesentlichen aus CO₂ und H₂O zu Synthesegas aus CO und H₂ bereitzustellen. Die vorliegende Erfindung ist in diesem Zusammenhang bevorzugt dahingehend weitergebildet, dass das zumindest eine Förderrohr zur Einbringung von Sauerstoff und/oder H₂O in das Steigrohr ausgebildet ist. Der Sauerstoff kann hierbei in Form von Umgebungsluft oder aber bevorzugt auch als weitgehend reines Sauerstoffgas technischer Herkunft bereitgestellt werden. Eine erhebliche Steigerung der H₂-Ausbeute gelingt in der erfindungsgemäßen Vorrichtung, wenn alternativ oder zusätzlich eine von dem zumindest einen Förderrohr verschiedene Zuleitung für Sauerstoff und/oder H₂O in das Steigrohr mündet, sodass Sauerstoff und insbesondere H₂O als Dampf eingebracht werden kann. Die Gegenwart von H₂O begünstigt bei Temperaturen unterhalb von 300°C eine exotherme Wassergas-Shiftreaktion, bei der CO und H₂O zu CO₂ und H₂ umgesetzt werden (CO + H₂O -> CO₂ + H₂). Somit werden durch die einfach Zugabe von Wasserdampf bedeutend größere Mengen an wertvollem Wasserstoffgas (H₂) gewonnen, welches in der Folge thermisch oder bevorzugt in der chemischen Industrie, der Metallurgie oder zur Energiegewinnung in Brennstoffzellen verwertet werden kann.

In diesem Zusammenhang kann es als bevorzugt angesehen werden, wenn das zumindest eine Förderrohr an seinem Umfang eine Mehrzahl von am offenen Ende des Förderrohrs mündenden Röhren aufweist, die zur Förderung von Wasser und/oder Wasserdampf zum offenen Ende eingerichtet sind. Auf diese Weise wird nicht nur die soeben erläuterte zusätzliche Einbringung von H₂O ermöglicht, sondern gleichzeitig eine effektive Kühlung des Förderrohrs durch in den Röhren geführtes und dort verdampfendes Wasser bereitgestellt. Das in den Röhren verdampfende Wasser kann durch die beim Verdampfen auftretende Volumenvergrößerung am offenen Ende stoßartig austreten und auf diese Weise für eine zusätzliche Desintegration der in das Steigrohr eingetragenen Altstoffe sorgen. Die Röhren sind am Umfang des Förderrohrs angeordnet und können hierbei bevorzugt außen an dem zumindest einen Förderrohr aufgebracht sein oder in die Wand des zumindest einen Förderrohrs eingearbeitet sein oder die Wand teilweise ausbilden.

Eine weitere bevorzugte Ausführungsform der vorliegenden Erfindung sieht vor, dass das zumindest eine Förderrohr im Steigrohr konzentrisch von einer äußeren Wasserdampfleitung umgeben ist. Auch auf diese Weise kann Wasser in das Steigrohr eingebracht und das Förderrohr gleichzeitig vor übermäßiger Hitze im Steigrohr geschützt werden. Ein kontrollierter Dampfstrom kann darüber hinaus eine effektive Zerstäubung beispielsweise von verflüssigten Altkunststoffen bewirken.

Darüber hinaus kann es gemäß einer bevorzugten Ausführungsform der vorliegenden Erfindung vorgesehen sein, dass in dem zumindest einen Förderrohr eine innere Wasserdampfleitung konzentrisch angeordnet ist, wobei die innere Wasserdampfleitung und das Förderrohr außerhalb des Steigrohrs konvergieren und das Förderohr die innere Wasserdampfleitung überragend in das Steigrohr eintritt. Auf diese Weise wird beispielsweise verflüssigter Altkunststoff schon im Förderrohr zerstäubt und kann auf diese Weise mit einer großen spezifischen Oberfläche umgesetzt werden. Mit einer derart ausgestalteten Vorrichtung gemäß der vorliegenden Erfindung können insbesondere hoch Chlor-haltige Kunststoffe extrem rasch einer Pyrohydrolyse und Vergasung zu H₂ und CO unterworfen werden. Die dabei entstehende Salzsäure (HCl) kann durch Zugabe von Kalk-Additiv (CaO, Ca(OH)₂) neutralisiert werden.

Die erfindungsgemäße Vorrichtung eignet sich in besonderem Maß für die Entsorgung von Altkunststoffen und ist daher bevorzugt dahingehend weitergebildet, dass das Förderrohr über eine Zuleitung mit einem Schmelzbehälter für Kunststoff verbunden ist, wobei bevorzugt der Schmelzbehälter mit einem Inertgas, insbesondere mit Stickstoff, druckbeaufschlagt ist. Altkunststoffen können bevorzugt vor Eintritt in das Förderrohr Stahlwerksstäube zugegeben werden, da diese neben hervorragenden katalytischen Eigenschaften in Bezug auf die Vergasung der Altstoffe und deren Umsetzung in der Wassergas-Shift-Reaktion insbesondere durch die Anwesenheit von Zn und Fe in den Stäuben auch Entschwefelungseigenschaften durch die Bildung von Metallsulfiden wie beispielsweise ZnS oder FeS₂ aus H₂S aufweisen. Die Konzentration von H₂S kann auf diese Weise im Abgas auf unter 50 ppm gesenkt werden.

Da die Wassergas-Shiftreaktion exotherm ist, kann es vorgesehen sein, dass im Inneren des Steigrohrs eine Kühlvorrichtung angeordnet ist, um das Gas im Steigrohr zu kühlen, wobei die Kühlvorrichtung bevorzugt aus einer Legierung aus Eisen, Cobalt, Molybdän und/oder Chrom besteht, wie dies einer bevorzugten Ausführungsform der vorliegenden Erfindung entspricht. Die Kühlvorrichtung ist in einem Bereich des Steigrohrs oberhalb der Aufgabevorrichtung angeordnet. In diesem Bereich der Kühlvorrichtung liegt Synthesegas entweder bereits bei Temperaturen unterhalb von 700°C vor, ab welcher Temperatur die Wassergas-Shiftreaktion erfolgen kann, um die Ausbeute von H₂ aus dem Synthesegas zu erhöhen, oder aber die Kühlvorrichtung ist geeignet, die Temperatur entsprechend abzusenken. Die Kühlung erfolgt hierbei bevorzugt auf eine Gastemperatur von anfangs ungefähr 700°C auf 380°C am Ende des Strömungswegs des Gases durch die Kühlvorrichtung im Steigrohr. Auf diese Weise wird im Steigrohr eine Gaskonvertierung auf einem relativ hohen Temperaturniveau erzielt. Die Ausführung der Kühlvorrichtung aus Eisen, Cobalt, Molybdän und/oder Chrom bewirkt eine heterogene Katalyse der Wassergas-Shiftreaktion.

Alternativ oder zusätzlich kann es je nach den verfahrenstechnischen Gegebenheiten vorgesehen sein, dass im Inneren des Steigrohrs eine Heizvorrichtung angeordnet ist, um das Gas im Steigrohr zu erhitzen, wobei die Heizvorrichtung bevorzugt aus einer Legierung aus Eisen, Cobalt, Molybdän und/oder Chrom besteht. Dies kann dann sinnvoll sein, wenn im Vergasergas im Steigrohr bedeutende Mengen von refraktärem Kohlenstoff (Ruß) gebildet werden. Dieser refraktäre Kohlenstoff kann durch die Heizvorrichtung wieder aktiviert und abgebaut werden. Wenn der refraktäre Kohlenstoff nicht wie beschrieben aktiviert wird, kann er aus dem Prozess abgezogen und beispielsweise in der Reifenherstellung als sogenanntes "Carbon Black" eingesetzt werden.

Für die Eliminierung feststofflicher Anteile aus dem Strom des in der erfindungsgemäßen Vorrichtung gebildeten Gases ist die Erfindung bevorzugt dahingehend weitergebildet, dass das Abgasaufbereitungssystem einen Gaszyklon und/oder einen Schlauchfilter umfasst und bevorzugt eine Rückführungsvorrichtung für Feinstaub, insbesondere Schwermetall-Feinstaub, aus dem Gaszyklon und/oder dem Schlauchfilter in das Steigrohr mündet. Bevorzugt können alternativ oder zusätzlich auch Tiefbettfilter, Keramikfilter oder Elektrofilter zum Einsatz gelangen. Als besonders vorteilhaft ist hierbei anzusehen, dass der ausgefilterte Feinstaub, umfassend Schwermetallfraktionen von Zink, Kupfer, Cadmium, Eisen und dergleichen mit Korngrößen kleiner als 20 µm vorliegen, wobei ungefähr 98% des Feinstaubs mit Korngrößen von kleiner als 5 µm vorliegen, bei Rückführung in das Steigrohr im Bereich der Kühlvorrichtung oder knapp unterhalb davon hervorragende katalytische Eigenschaften für die Wassergas-Shiftreaktion aufweisen. Um die katalytischen Eigenschaften des Schwermetall-Feinstaubs sicherzustellen, kann ein eventueller Überschuss an Halogen- und Schwefelverbindungen durch die Zugabe von Alkalien oder Erdalkalien abgefangen werden, die entweder den Altstoffen zugegeben oder aber über eine separate Zuleitung eingebracht werden können, beispielsweise über die von dem zumindest einen Förderrohr verschiedene Zuleitung zum Eindüsen von Sauerstoff und/oder H₂O.

Um die H₂-Ausbeute des in der Vorrichtung gewonnen Gases durch die Wassergas-Shiftreaktion weiter zu erhöhen und um den Anteil von CO dabei gleichzeitig zu verringern, ist es bevorzugt, dass zwischen dem Steigrohr und dem Abgasaufbereitungssystem ein, bevorzugt koaxial, an das Steigrohr anschließendes Konverterrohr mit im Vergleich zum Steigrohr vergrößertem Durchmesser angeordnet ist, wobei das Konverterrohr bevorzugt aus einer Legierung aus Eisen, Cobalt, Molybdän und/oder Chrom besteht. Das Konverterrohr zeichnet sich somit gegenüber dem Steigrohr durch einen vergrößerten Durchmesser aus, wodurch die Strömungsgeschwindigkeit des Gases im Konverterrohr verringert und die Verweilzeit des Gases im Konverterrohr folglich erhöht wird. Die Wandungen des Konverterrohrs können bevorzugt, wie bereits oben im Zusammenhang mit der Kühlvorrichtung erläutert, aus den besagten katalytisch wirksamen Legierungen gebildet sein. Im Konverterrohr kommt es zu einer weiteren Absenkung der Gastemperatur von anfangs ungefähr 380°C auf ungefähr 200°C, wodurch die Wassergas-Shiftreaktion auf niedrigem Temperaturniveau vorangetrieben und die H₂-Ausbeute weiter erhöht wird. Hierfür ist im Konverterrohr wiederum eine entsprechende Kühlvorrichtung angeordnet. In dem Konverterrohr wird eine isotherme Wirbelschicht ausgebildet, indem das Konverterrohr mit Stahlwerksstaub befüllt wird, wobei der Stahlwerksstaub von dem Gasstrom in Schwebe gehalten werden kann. Gegebenenfalls kommt es auch in der genannten Wirbelschicht aufgrund der erhöhten Verweilzeit zu der Reaktivierung refraktären Kohlenstoffs. Bevorzugt kann anstelle der Wirbelschicht auch ein mit keramischer Masse befülltes Tiefbettfilter zum Einsatz kommen.

Um den Stahlwerksstaub zuverlässig daran zu hindern, nach unten ins Steigrohr zu gelangen, kann die vorliegende Erfindung bevorzugt dahingehend weitergebildet sein, dass zwischen dem Steigrohr und dem Konverterrohr ein gasdurchlässiger Boden angeordnet ist, bevorzugt in Form eines Drahtnetzes, eines Kreuzgitters, einer Lochplatte, eines Rostes oder eines keramischen Tiefbettfilters. Diese bevorzugten Einbauten stützen die Wirbelschicht gegen das Absinken nach unten und es können größere Mengen Stahlwerksstaub zum Aufbau einer lockeren Schicht aus Stahlwerksstaub in das Konverterrohr eingebracht werden.

Durch die Gegenwart von Stahlwerksstaub im Konverterrohr gelingt aufgrund katalytischer Vorgänge eine beinahe vollständige Eliminierung von CO im Abgas, sodass im Abgas lediglich CO₂ und große Anteile von H₂ erhalten werden.

Wie dies schon im Zusammenhang mit der Hochtemperatur-Wassergas-Shiftreaktion im Bereich der Kühlvorrichtung im Steigrohr beschrieben wurde, kann auch im Bereich des Konverterrohrs die Katalyse der Wassergas-Shiftreaktion weiter optimiert werden, wenn eine Rückführungsvorrichtung für Feinstaub, insbesondere Schwermetall-Feinstaub, aus dem Gaszyklon und/oder dem Schlauchfilter in das Konverterrohr mündet, wie dies einer bevorzugten Ausführungsform der vorliegenden Erfindung entspricht.

Das erfindungsgemäße Verfahren zum Verwerten von Prozessgas unter Umsetzung von Altstoffen, insbesondere Holzschnitzel, Biomasse, Müllfraktionen, Altkunststoffe, Altlösungsmittel, Shredder-Leichtfraktion, Altholz und dergleichen, und unter Bildung von Synthesegas geschieht gemäß den Merkmalen nach Anspruch 14.

Die Umsetzung von Altstoffen, insbesondere Holzschnitzel, Biomasse, Müllfraktionen, Altkunststoffe, Shredder-Leichtfraktion, Altholz und dergleichen unter Bildung von Synthesegas erfolgt bei dem erfindungsgemäßen Verfahren bevorzugt bei Prozessgas-Temperaturen von 1800°C bis 700°C, bevorzugt 1700°C bis 700°C, weiter bevorzugt bei 1600°C bis 700°C. Diese Temperaturniveaus des Prozessgases rühren von einem dem erfindungsgemäßen Verfahren vorangehenden Verbrennungsprozess her und liefern für die Pyrolyse und gegebenenfalls Teilvergasung der Altstoffe genügend Wärme und auch Reaktanden (CO₂ und H₂O), wie dies vorstehend beschrieben wurde. Das Prozessgas des vorangehenden Verbrennungsprozesses besteht im Wesentlichen aus CO₂ und H₂O und durch die Pyrolyse und Vergasung der genannten Altstoffe resultiert aus dem Prozessgas und den Pyrolyse- und Vergasungsprodukten der Altstoffe Synthesegas (auch bekannt als Wassergas) bestehend im Wesentlichen aus CO und H₂.

Das erfindungsgemäße Verfahren wird bevorzugt dergestalt durchgeführt, dass eine Konvertierung des Synthesegases im Sinne einer Wassergas-Shiftreaktion im Steigrohr unter Kühlung, bevorzugt bei Temperaturen von anfangs 700°C bis 380°C am Ende, und/oder in einem, bevorzugt koaxial, an das Steigrohr anschließenden Konverterrohr mit im Vergleich zum Steigrohr vergrößertem Durchmesser bei Temperaturen von anfangs 380°C bis 200°C am Ende erfolgt, wobei das Konverterrohr bevorzugt aus einer Legierung aus Eisen, Cobalt, Molybdän und/oder Chrom besteht. Die grundsätzlichen erfinderischen Überlegungen zu den erfindungsgemäßen Merkmalen des Verfahrens hinsichtlich des Konverterrohrs mit vergrößertem Durchmesser sowie hinsichtlich der heterogenen Katalyse durch die genannten Legierungen und/oder Stahlwerksstäube (diese Stäube fallen beim LD-Frischprozess und im E-Ofen zur Stahlerzeugung an) wurden bereits im Zusammenhang mit der Beschreibung der erfindungsgemäßen Vorrichtung erläutert. Am Ende der Gaskonvertierung im Gas enthaltenes CO₂ kann beispielsweise durch Membranverfahren oder durch eine alkalische Wäsche oder aber auch durch PSA-Verfahren (Druckwechsel-Adsorption) entfernt werden und es wird beinahe reines Wasserstoffgas erhalten. Insbesondere bei der Druckwechsel-Adsorption können Reinheiten des gewonnen Wasserstoff-Gases von bis zu 99,999% erzielt werden.

Aus den bereits oben genannten Überlegungen zur Einleitung einer Wassergas-Shiftreaktion zur verstärkten Bildung von Wasserstoff (H₂), kann gemäß einer bevorzugten Ausführungsform der vorliegenden Erfindung dem Steigrohr Wasser und/oder Wasserdampf zugeführt werden.

Gemäß der vorliegenden Erfindung werden den Altstoffen, insbesondere im Fall von Altkunststoffen, vor Eintritt in das Förderrohr Stahlwerksstäube zugesetzt werden. Stahlwerksstäube weisen neben hervorragenden katalytischen Eigenschaften in Bezug auf die Vergasung der Altstoffe und deren Umsetzung in der Wassergas-Shift-Reaktion insbesondere durch die Anwesenheit von Zn, Co und Fe in den Stäuben auch Entschwefelungseigenschaften durch die Bildung von Metallsulfiden (ZnS, FeS₂) aus H₂S auf. Die Konzentration von H₂S kann auf diese Weise im Abgas auf unter 50 ppm gesenkt werden. Hierbei werden die Kationen der Stahlwerksstäube reduziert durch H₂ und CO im Wassergas. Bevorzugt werden die Stahlwerkstäube nach ihrer Reduktion durch Zugabe von Wasserdampf unter Bildung von H2 oxidiert. Das heißt, dass die reduzierten Stäube durch die Zugabe von Wasser bevorzugt in einer Wirbelschicht bei 400°C bis 900°C wieder regeneriert werden, wobei insbesondere die katalytisch wirksamen Spezies FeO und ZnO gebildet werden, die wiederum zur Katalyse einsetzbar sind. Das zugegebene Wasser wird dabei zu Wasserstoff reduziert. Somit trägt die Regeneration der Katalysatoren wiederum zu einer erhöhten Wasserstoffausbeute des erfindungsgemäßen Prozesses bei.

Wenn dem erfindungsgemäßen Verfahren Altstoffe in ungenügendem Ausmaß zugegeben werden, ist im Synthesegas des erfindungsgemäßen Verfahrens nach der oben beschriebenen Umsetzung der Altstoffe durch das Prozessgas noch CO₂ in größeren Mengen messbar. Das erfindungsgemäße Verfahren ist daher bevorzugt dahingehend weitergebildet, dass CO₂ im Synthesegas gemessen und die Zugabe von Altstoffen erhöht wird, wenn der CO₂-Gehalt im Synthesegas größer als 2 Vol.-% ist.

Bevorzugt erfolgt die Konvertierung des Synthesegases im Konverterrohr in einer Wirbelschicht aus Stahlwerksstaub und/oder in einem keramischen Tiefbettfilter.

Für die Eliminierung feststofflicher Anteile aus dem Strom des in der erfindungsgemäßen Vorrichtung gebildeten Synthesegases ist das erfindungsgemäße Verfahren bevorzugt dahingehend weitergebildet, dass feststoffliche Anteile mittels eines an das Steigrohr oder das Konverterrohr anschließenden Gaszyklons und/oder Schlauchfilters abgetrennt werden.

Gemäß einer bevorzugten Ausführungsform der vorliegenden Erfindung, wird Feinstaub, insbesondere Schwermetall-Feinstaub, bestehend im Wesentlichen aus Schwermetallfraktionen von Zink, Kupfer, Cadmium, Cobalt, Eisen und dergleichen mit Korngrößen kleiner als 20 µm, wobei ungefähr 98% des Feinstaubs mit Korngrößen von kleiner als 5 µm vorliegen, aus dem Gaszyklon und/oder dem Schlauchfilter dem Steigrohr und/oder dem Konverterrohr rückgeführt. Dieser Schwermetall-Feinstaub weist hervorragende katalytische Eigenschaften für die Wassergas-Shiftreaktion auf. Ebenso ist es aus denselben Gründen als vorteilhaft anzusehen, dem Steigrohr LD(Linz-Donawitz)-Konverter- sowie E-Ofen und/oder Stahlwerksstaub aufgrund des hohen Anteils an Zn, Cu, Cr, Mo, Fe, Co, Mo, und dergleichen, welche hauptsächlich in oxidischer Form und sehr feinkörnig vorliegen, zuzuführen. Weiters können vorteilhaft Stäube aus der Müllverbrennung, welche hauptsächlich in chloridischer Form vorliegen, Shredder-Leichtfraktion wegen des hohen Silikatanteils sowie Aluminiumanteils und vor allem wegen der hochaktiven Nebengruppenelemente sowie Kabel-Schrott und/oder Elektroschrott dem erfindungsgemäßen Verfahren zugeführt werden.

Um die katalytischen Eigenschaften des Schwermetall-Feinstaubs sicherzustellen, kann ein eventueller Überschuss an Halogen- und Schwefelverbindungen abgefangen werden, wenn dem Steigrohr und/oder dem Konverterrohr Alkalien und/oder Erdalkalien zugeführt werden, beispielsweise über das zumindest eine Förderrohr. Dies entspricht einer bevorzugten Ausführungsform der vorliegenden Erfindung.

Das Zielgas, das mit der erfindungsgemäßen Vorrichtung beziehungsweise mit dem erfindungsgemäßen Verfahren erhalten werden soll, besteht im Wesentlichen aus H₂, CO₂, H₂O bei einer Temperatur von ungefähr 250°C. Nach dem Abkühlen auf ungefähr 40°C fällt entsprechend dem Taupunkt des Zielgases (Taupunkt des Wassers) ein Kondensat aus. Dem verbleibenden H₂ und CO₂ enthaltenden Gas wird in der Regel durch eine Aminwäsche (beispielsweise durch Monoethanolamin) oder durch kryogene Kondensation oder PSA-Verfahren das CO₂ entzogen. Auf diese Weise kann H₂ mit einer Reinheit von ungefähr 98% und bis zu 99,999% erhalten werden. Durch thermische Regeneration des (Monoethanol)amins wird hochkonzentriertes CO₂ erhalten, das beispielsweise als Inertgas Verwendung finden kann. Das regenerierte Amin kann dem Prozess erneut zur Aminwäsche rückgeführt werden.

Die Erfindung wird nachfolgend anhand eines in der Zeichnung dargestellten Ausführungsbeispiels näher erläutert. In dieser zeigen Figur 1 eine schematische Darstellung einer erfindungsgemäßen Vorrichtung, Figur 2 eine schematische Darstellung der Anordnung von Förderrohren einer nicht erfindungsgemäßen Aufgabevorrichtung, Figur 3 eine schematische Darstellung einer erfindungsgemäßen Anordnung eines Förderrohres der Aufgabevorrichtung, die Figuren 4a und 4b Schnittdarstellungen von Förderrohren der Aufgabevorrichtung einer erfindungsgemäßen Vorrichtung, Figur 5 eine schematische Darstellung eines Konverterrohrs zur Niedertemperatur-Gaskonvertierung, Figur 6 eine weitere Schnittdarstellungen eines Förderrohrs der Aufgabevorrichtung und Figur 7 eine schematische Darstellung einer nicht erfindungsgemäßen Aufgabevorrichtung.

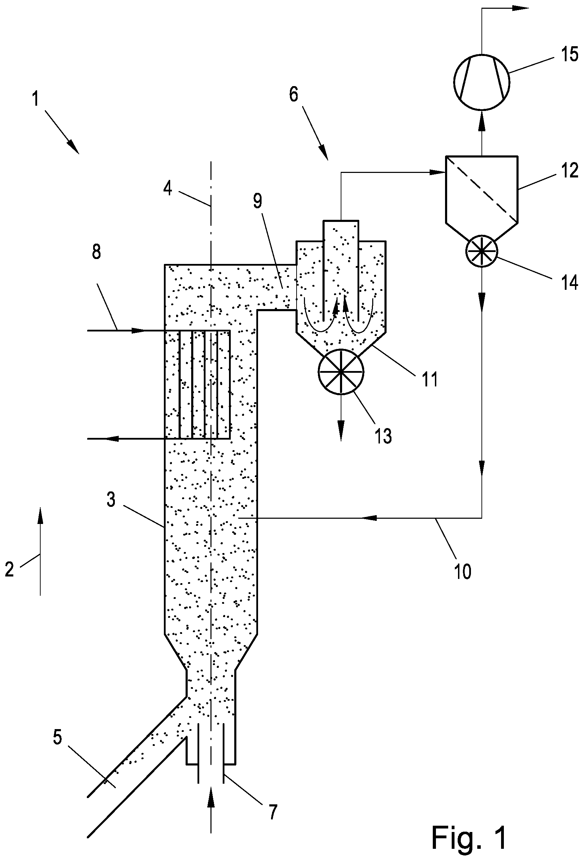

In Figur 1 ist die erfindungsgemäße Vorrichtung mit dem Bezugszeichen 1 bezeichnet. Die Vorrichtung 1 umfasst ein entlang einer axialen Richtung beziehungsweise Strömungsrichtung 2 ausgebildetes und vertikal angeordnetes Steigrohr 3. Die axiale Erstreckung ist auch durch die mit dem Bezugszeichen 4 bezeichnete Längsachse versinnbildlicht. Mit 5 ist eine in das Steigrohr 3 mündende Zuleitung für das Prozessgas bezeichnet. An das Steigrohr 3 schließt ein Abgasaufbereitungssystem 6 für im Steigrohr 3 gebildetes Gas an. Die Altstoffe werden der Vorrichtung 1 über eine Aufgabevorrichtung 7 aufgegeben. Im oberen Bereich des Steigrohrs 3 ist eine Kühlvorrichtung 8 zur Kühlung des Synthesegases angeordnet. Durch die Kühlvorrichtung 8 wird im Steigrohr 3 eine Hochtemperatur-Gaskonvertierung in Form einer Wassergas-Shiftreaktion des Synthesegases bei Temperaturen von anfangs 700°C bis 380°C am Ende des Wirkbereichs der Kühlvorrichtung 8 ermöglicht. Alternativ oder zusätzlich zur Kühlvorrichtung 8 kann zur Reaktivierung von refraktärem Kohlenstoff eine Heizeinrichtung in derselben Art wie die Kühlvorrichtung 8 vorgesehen sein. Es ist weiters denkbar, dass die Kühlvorrichtung 8 bei Bedarf als Heizeinrichtung betreibbar ist. Weiter in Richtung der Strömungsrichtung 2 ist ein Abzug 9 und daran anschließend das Abgasaufbereitungssystem 6 für im Steigrohr 3 gebildetes Gas vorgesehen. Das Abgasaufbereitungssystem 6 umfasst in der in Figur 1 bezeichneten Ausführungsform einen Zyklonabscheider 11 sowie einen Schlauchfilter 12. Sowohl aus dem Zyklonabscheider 11 als auch aus dem Schlauchfilter 12 können feststoffliche Anteile aus dem Gasstrom am Zyklonabscheider 11 und am Schlauchfilter 12 aus Zellradschleusen 13 und 14 ausgetragen werden und insbesondere im Falle von Schwermetall-Feinstaub aus dem Schlauchfilter 12 über eine entsprechende Rückführleitung 10 dem Steigrohr 3 zur Katalyse der Wassergas-Shiftreaktion rückgeführt werden. Aus dem Saugzug 15 wird das gereinigte Gas, das der Wassergas-Shiftreaktion zur Steigerung der H₂-Ausbeute unterzogen wurde, abgezogen und kann in der Folge einer thermischen Verwertung oder bevorzugt der chemischen Industrie, der Verwertung in Brennstoffzellen oder der Metallurgie zugeführt werden.

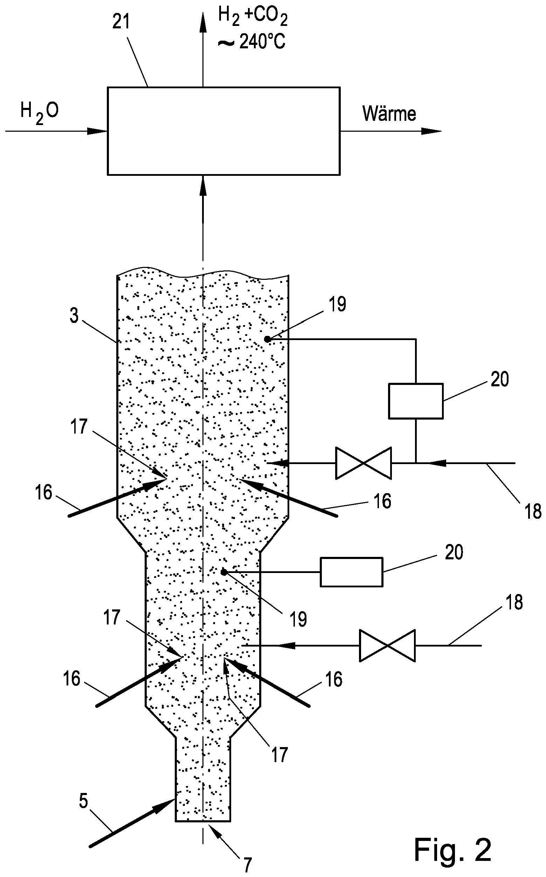

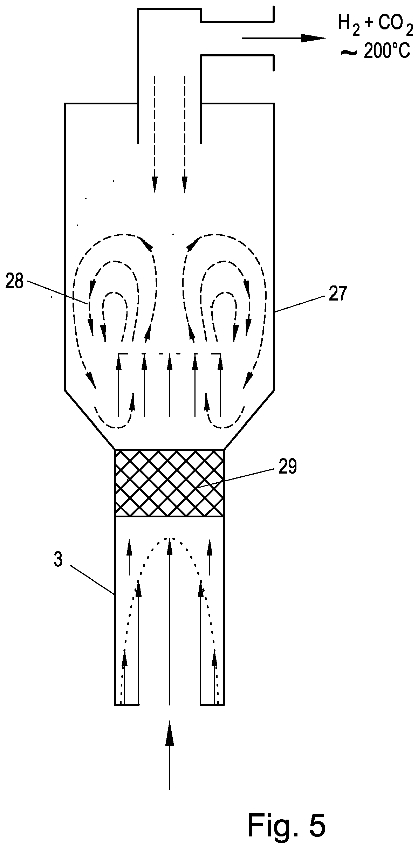

In Figur 2 und den weiteren Figuren sind gleiche Teile mit gleichen Bezugszeichen bezeichnet und es ist zu erkennen, dass Förderrohre 16 radial oder tangential über eine definierte Länge in das Steigrohr 3 ragen. Die Förderrohre 16 werden vom heißen Prozessgasstrom umströmt und darin befindliche Altstoffe entsprechend erwärmt und in der Folge pyrolysiert. An den Positionen 17 weisen die Förderrohre 16 sich in das Steigrohr 3 eröffnende offene Enden auf, aus denen aufgrund der Pyrolysevorgänge die durch die Förderrohre 16 eingebrachten Altstoffe explosionsartig in das Steigrohr 3 geschleudert werden. Mit dem Bezugszeichen 18 ist eine von den Förderrohren 16 verschiedene Zuleitung für Sauerstoff und/oder H₂O und/oder O₂ in das Steigrohr 3 bezeichnet. Grundsätzlich kann je nach den stöchiometrischen Erfordernissen auch CO₂ oder H₂O eingebracht werden. Die stöchiometrischen Erfordernisse werden mittels einer Sensorvorrichtung 19 bestimmt und in einer Regelungseinheit 20 die Zuleitung von Sauerstoff und/oder H₂O und gegebenenfalls CO₂ geregelt. Eine weitere Sensorvorrichtung ist weiter oben im Steigrohr 3 mit denselben Bezugszeichen bezeichnet. Im oberen Teil der erfindungsgemäßen Vorrichtung 1 ist ein Gaskonverter 21 schematisch dargestellt, dem Wasserdampf zugeführt wird, um dadurch eine exotherme Wassergas-Shiftreaktion, bei der CO und H₂O zu CO₂ und H₂ umgesetzt werden, zu begünstigen. Der Gaskonverter 21 ist in Figur 2 als Blockdiagramm dargestellt, der Gaskonverter 21 ist jedoch entweder als Kühlvorrichtung 8 im Steigrohr 3 und/oder, wie weiter unten im Zusammenhang mit den Erläuterungen zu Figur 5 als Konverterrohr mit vergrößertem Durchmesser ausgebildet.

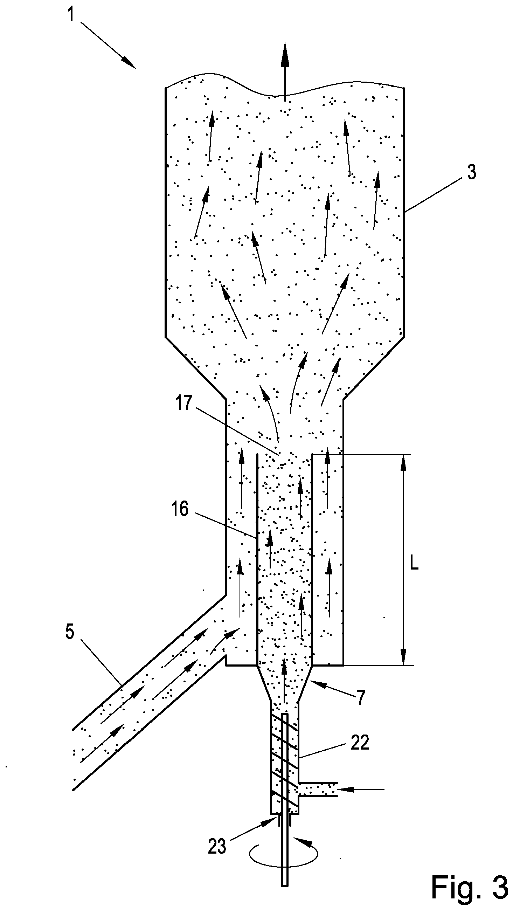

In Figur 3 ragt das Förderrohr 16 über die definierte Länge L in das Steigrohr 3 und weist ein sich in das Steigrohr 3 eröffnendes offenes Ende 17 auf. Die Altstoffe werden über die Aufgabevorrichtung 7 mittels einer Förderschnecke 22 durch das Förderrohr 16 gefördert, wobei die Förderschnecke 22 an einem dem offenen Ende 17 abgewandten Ende 23 des Förderrohrs 16 angeordnet ist. Dadurch, dass die Zuleitung 5, in axialer Richtung unterhalb des Förderrohrs 16 beziehungsweise unterhalb dessen offenen Endes 17 in das Steigrohr 3 mündet, wird das Förderrohr 16 von dem durch die Zuleitung 5 strömenden Prozessgas umströmt und dadurch erhitzt. In der Folge kommt es zu einer Pyrolyse der Altstoffe in dem Förderrohr 16 und gegebenenfalls zu einer teilweisen Vergasung der Altstoffe, sodass die pyrolysierten Altstoffe am offenen Ende 17 des Förderrohr 16 in das Steigrohr 3 geschleudert und vom Prozessgasstrom mitgerissen werden.

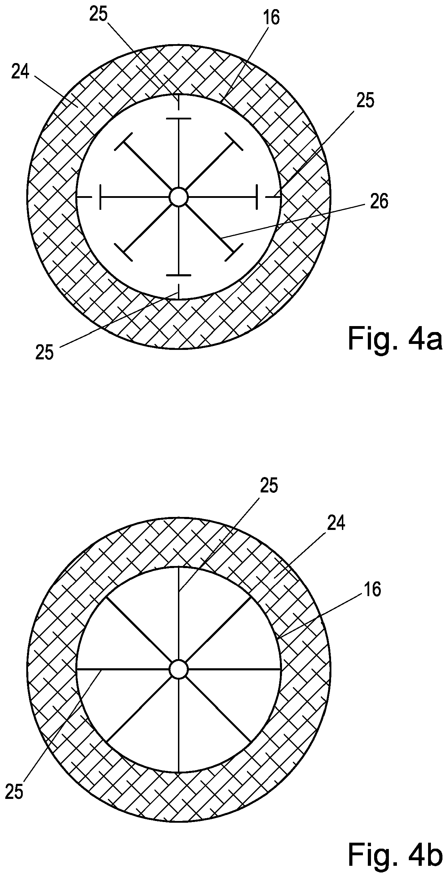

Figur 4a zeigt ein Förderrohr 16 mit einer feuerfesten Ummantelung 24, wobei neben sich radial in das Innere des Förderrohrs 16 erstreckenden Lamellen 25 ein Rotor 26 zur Durchmischung der Altstoffe angeordnet ist.

In Figur 4b ist ein Förderrohr 16 mit einer feuerfesten Ummantelung 24 dargestellt, wobei das Förderrohr 16 sich radial in das Innere des Förderrohrs 16 erstreckende Lamellen 25 aufweist, um die von außen auf das Förderrohr 16 wirkende Wärme des Prozessgases zu den im Inneren befindlichen Altstoffen zu leiten.

In Figur 5 ist zu erkennen, dass an das Steigrohr 3 koaxial ein Konverterrohr 27 mit im Vergleich zum Steigrohr 3 vergrößertem Durchmesser angeordnet ist, wobei das Konverterrohr 27 aus einer Legierung aus Eisen, Cobalt, Molybdän und/oder Chrom bestehen kann. Im Konverterrohr 27 liegt eine isotherme Wirbelschicht 28 aus Stahlwerksstaub vor, die durch die Gasströmung in Schwebe gehalten wird. Zwischen dem Steigrohr 3 und dem Konverterrohr 27 ist ein gasdurchlässiger Boden 29 angeordnet, hier in Form eines Kreuzgitters 29, wodurch das Absinken des Stahlwerksstaubes hintangehalten wird. Bei ausreichender Befüllung des Konverterrohrs 27 kann sich auch eine lockere Schicht aus Stahlwerksstaub ausbilden, die nicht mehr in Schwebe gehalten wird, sondern auf dem Kreuzgitter 29 aufliegt und von dem Gasstrom durchströmt und verwirbelt wird. Es ist durch die Pfeilscharen im Steigrohr 3 und 27 dargestellt, dass es durch die Vergrößerung des Durchmessers im Konverterrohr 27 im Vergleich zum Steigrohr 3 zu einer Vergleichmäßigung der Strömungsgeschwindigkeit des Gases kommt. Gleichzeitig führt die Vergrößerung des Durchmessers zu einem Abfall der Strömungsgeschwindigkeit und dadurch zu einer erhöhten Verweilzeit des Gases im Konverterrohr 27.

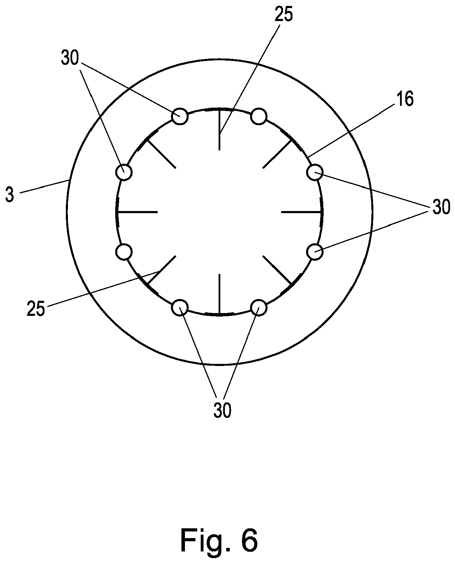

In Figur 6 ist wiederum ein Förderrohr 16 gezeigt, das ohne eine feuerfeste Ummantelung das Auslangen findet. Um das Förderrohr 16 vor dem heißen Prozessgas zu schützen, sind an seinem Umfang eine Mehrzahl von am offenen Ende 17 des Förderrohrs 16 mündenden Röhren 30 angeordnet, die zur Förderung von Wasser und/oder Wasserdampf zum offenen Ende 17 eingerichtet sind. Durch die Hitze des Prozessgases verdampft Wasser in den Röhren 30, wodurch das Förderrohr 16 gekühlt wird. Wie schon im Zusammenhang mit den Figuren 4a und 4b erläutert, sind auch bei dem Förderrohr 16 der Figur 6 Lamellen 25 vorgesehen, die sich radial in das Innere des Förderrohrs 16 erstrecken. Die Röhren 30 bilden im Beispiel der Figur 6 die Wand des Förderrohrs 16 aus.

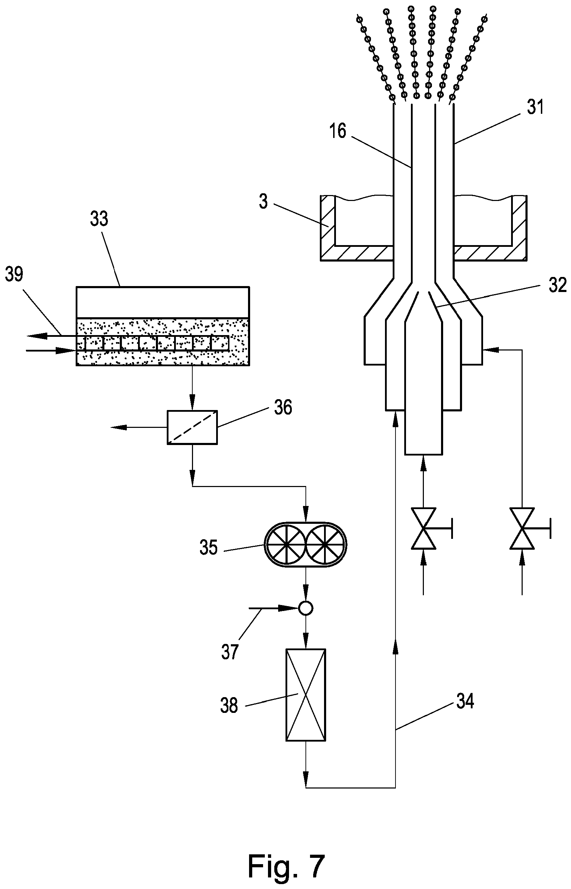

In Figur 7 ist zu erkennen, dass das Förderrohr 16 im Steigrohr konzentrisch von einem äußeren Rohr 31 umgeben ist, welches eine äußere, konzentrisch zum Förderrohr 16 angeordnete Wasserdampfleitung 31 darstellt. Weiters ist konzentrisch zum Förderrohr ein weiteres Rohr 32 im Inneren des Förderrohrs, jedoch außerhalb des Steigrohrs 3 abgeordnet. Dieses Rohr 32 bildet eine konzentrisch im Förderrohr 16 angeordnete Wasserdampfleitung 32. Die Wasserdampfleitung 32 und das Förderrohr 16 konvergieren und das Förderrohr 16 tritt die innere Wasserdampfleitung 32 überragend in das Steigrohr 3 ein. Auf diese Weise können Altkunststoffe, die in einem Schmelzbehälter 33 durch die Wirkung einer Heizeinrichtung 39 aufgeschmolzen und über eine Zuleitung 34 mit Hilfe einer Zahnradpumpe 35 in das Förderrohr 16 gefördert werden, schon vor dem Eintritt in das Förderrohr 16 zerstäubt werden. Auf diese Weise erfahren diese Altstoffe eine erhebliche Vergrößerung ihrer spezifischen Oberfläche und werden auf diese Weise überaus effizient pyrohydrolysiert und vergast. Unaufgeschmolzene Feststoffe können aus der Kunststoffschmelze mittels eines Filters 36 abgefiltert werden. Mit 37 ist eine Zudosierungsvorrichtung für Katalysatoren und insbesondere Stahlwerksstäube sowie gegebenenfalls Kalkträger zur Neutralisierung von HCl (gebildet bei Einsatz chlorhaltiger Kunststoffe wie PVC) bezeichnet. Das Bezugszeichen 38 bezeichnet einen Mischer für die Altkunststoffe und die Katalysatoren. Die aufgeschmolzenen Altkunststoffe im Schmelzbehälter 33 liegen durch ein Inertgas druckbeaufschlagt vor. Die Aufgabevorrichtung gemäß der Figur 7 sorgt auf diese Weise dafür, dass die aufgeschmolzenen Altkunststoffe fein zerstäubt in Form von Tröpfchen in das Steigrohr 3 eintreten.

## Patentansprüche

1. Vorrichtung (1) zum Verwerten von Prozessgas unter Umsetzung von Altstoffen und Bildung von Synthesegas, die Vorrichtung (1) zumindest umfassend
ein entlang einer axialen Richtung (4) ausgebildetes und vertikal angeordnetes Steigrohr (3), eine in das Steigrohr (3) mündende Zuleitung (5) für das Prozessgas und ein an das Steigrohr (3) anschließendes Abgasaufbereitungssystem (6) sowie eine Aufgabevorrichtung (7) für die Altstoffe mit zumindest einem über eine definierte Länge (L) in das Steigrohr (3) ragenden Förderrohr (16), wobei das zumindest eine Förderrohr (16) ein sich in das Steigrohr (3) eröffnendes offenes Ende (17) aufweist und die Zuleitung (5) in axialer Richtung (4) unterhalb des offenen Endes (17) in das Steigrohr (3) mündet, sodass das zumindest eine Förderrohr (16) von von der Zuleitung (5) in das Steigrohr (3) eintretendem Prozessgas umströmbar ist, **dadurch gekennzeichnet, dass** das zumindest eine Förderrohr (16) an einem dem offenen Ende (17) abgewandten Ende (23) eine Fördervorrichtung (22) aufweist in Form einer in dem Förderrohr angeordneten Förderschnecke, eines Kolbenschiebers und/oder einer Dickstrompumpe, wobei bevorzugt das zumindest eine Förderrohr (16) zum offenen Ende (17) hin eine Aufweitung aufweist, wobei die Aufweitung bevorzugt konisch oder gekrümmt ist.

2. Vorrichtung nach Anspruch 1, **dadurch gekennzeichnet, dass** die Aufgabevorrichtung (7) von einer Mehrzahl von radial oder tangential in das Steigrohr (3) ragenden Förderrohren (16) gebildet ist, wobei die Förderrohre (16) bevorzugt in Bezug auf die axiale Richtung (4) schräg nach oben gerichtet sind oder dass die Aufgabevorrichtung (7) von einem an einem unteren Ende des Steigrohrs (3) in axialer Richtung (4), insbesondere konzentrisch, in das Steigrohr (3) ragenden Förderrohr (16) gebildet ist.

3. Vorrichtung nach Anspruch 1 oder 2, **dadurch gekennzeichnet, dass** das zumindest eine Förderrohr (16) sich radial in das Innere des Förderrohrs (16) erstreckende Lamellen (25) aufweist und bevorzugt das zumindest eine Förderrohr (16) einen axial gelagerten Rotor (26) aufweist.

4. Vorrichtung nach einem der Ansprüche 1 bis 3, **dadurch gekennzeichnet, dass** das zumindest eine Förderrohr (16) eine feuerfeste Ummantelung (24) aufweist.

5. Vorrichtung nach einem der Ansprüche 1 bis 4, **dadurch gekennzeichnet, dass** das zumindest eine Förderrohr (16) zur Einbringung von Sauerstoff und/oder H₂O in das Steigrohr (3) ausgebildet ist, wobei bevorzugt eine von dem zumindest einen Förderrohr (16) verschiedene Zuleitung (18) für Sauerstoff und/oder H₂O in das Steigrohr (3) mündet.

6. Vorrichtung nach einem der Ansprüche 1 bis 5, **dadurch gekennzeichnet, dass** das zumindest eine Förderrohr (16) an seinem Umfang eine Mehrzahl von am offenen Ende (17) des Förderrohrs (16) mündenden Röhren (30) aufweist, die zur Förderung von Wasser und/oder Wasserdampf zum offenen Ende (17) eingerichtet sind.

7. Vorrichtung nach einem der Ansprüche 1 bis 6, **dadurch gekennzeichnet, dass** das zumindest eine Förderrohr (16) im Steigrohr (3) konzentrisch von einer äußeren Wasserdampfleitung (31) umgeben ist.

8. Vorrichtung nach einem der Ansprüche 1 bis 7, **dadurch gekennzeichnet, dass** in dem zumindest einen Förderrohr (16) eine innere Wasserdampfleitung (32) konzentrisch angeordnet ist, wobei die innere Wasserdampfleitung (32) und das Förderrohr (16) außerhalb des Steigrohrs (3) konvergieren und das Förderohr (16) die innere Wasserdampfleitung (32) überragend in das Steigrohr (3) eintritt.

9. Vorrichtung nach einem der Ansprüche 1 bis 8, **dadurch gekennzeichnet, dass** das Förderrohr (16) über eine Zuleitung (34) mit einem Schmelzbehälter (33) für Kunststoff verbunden ist, wobei bevorzugt der Schmelzbehälter (33) mit einem Inertgas, insbesondere mit Stickstoff, druckbeaufschlagt ist.

10. Vorrichtung nach einem der Ansprüche 1 bis 9, **dadurch gekennzeichnet, dass** im Inneren des Steigrohrs (3) eine Kühlvorrichtung (8) angeordnet ist, um das Gas im Steigrohr (3) zu kühlen, wobei die Kühlvorrichtung (8) bevorzugt aus einer Legierung aus Eisen, Cobalt, Molybdän und/oder Chrom besteht und/oder dass im Inneren des Steigrohrs (3) eine Heizvorrichtung angeordnet ist, um das Gas im Steigrohr (3) zu erhitzen, wobei die Heizvorrichtung bevorzugt aus einer Legierung aus Eisen, Cobalt, Molybdän und/oder Chrom besteht.

11. Vorrichtung nach einem der Ansprüche 1 bis 10, **dadurch gekennzeichnet, dass** das Abgasaufbereitungssystem (6) einen Gaszyklon (11) und/oder einen Schlauchfilter (12) umfasst und bevorzugt eine Rückführungsvorrichtung (10) für Feinstaub, insbesondere Schwermetall-Feinstaub, aus dem Gaszyklon (11) und/oder dem Schlauchfilter (12) in das Steigrohr (3) mündet.

12. Vorrichtung nach einem der Ansprüche 1 bis 11, **dadurch gekennzeichnet, dass** zwischen dem Steigrohr (3) und dem Abgasaufbereitungssystem (6) ein, bevorzugt koaxial, an das Steigrohr (3) anschließendes Konverterrohr (27) mit im Vergleich zum Steigrohr (3) vergrößertem Durchmesser angeordnet ist, wobei das Konverterrohr (27) bevorzugt aus einer Legierung aus Eisen, Cobalt, Molybdän und/oder Chrom besteht, wobei bevorzugt zwischen dem Steigrohr (3) und dem Konverterrohr (27) ein gasdurchlässiger Boden (29) angeordnet ist, bevorzugt in Form eines Drahtnetzes, eines Kreuzgitters, einer Lochplatte, eines Rostes oder eines keramischen Tiefbettfilters.

13. Vorrichtung nach Anspruch 12, **dadurch gekennzeichnet, dass** eine Rückführungsvorrichtung (10) für Feinstaub, insbesondere Schwermetall-Feinstaub, aus dem Gaszyklon und/oder dem Schlauchfilter in das Konverterrohr (27) mündet.

14. Verfahren zum Verwerten von Prozessgas unter Umsetzung von Altstoffen, insbesondere Holzschnitzel, Biomasse, Müllfraktionen, Altkunststoffe, Altlösungsmittel Shredder-Leichtfraktion, Altholz und dergleichen, und unter Bildung von Synthesegas, bei welchem Verfahren das Prozessgas in ein entlang einer axialen Richtung (4) ausgebildetes und vertikal angeordnetes Steigrohr (3) geleitet wird und die Altstoffe durch zumindest ein Förderrohr (16) einer Aufgabevorrichtung (7) umströmendes Prozessgas pyrolysiert werden und im Steigrohr (3) eine Umsetzung des Prozessgases mit den pyrolysierten Altstoffen zu Synthesegas erfolgt, **dadurch gekennzeichnet, dass** den Altstoffen, insbesondere im Fall von Altkunststoffen, vor Eintritt in das Förderrohr (16) Stahlwerksstäube zugesetzt werden, wobei bevorzugt die Stahlwerkstäube nach ihrer Reduktion durch Zugabe von Wasserdampf unter Bildung von H₂ oxidiert werden, wobei bevorzugt die Umsetzung von Altstoffen, insbesondere Holzschnitzel, Biomasse, Müllfraktionen, Altkunststoffe, Shredder-Leichtfraktion, Altholz unter Bildung von Synthesegas bei Prozessgas-Temperaturen von 700°C bis 1800°C, bevorzugt 700°C bis 1700°C, weiter bevorzugt bei 700°C bis 1600°C erfolgt.

15. Verfahren nach Anspruch 14, **dadurch gekennzeichnet, dass** die Konvertierung des Synthesegases im Sinne einer Wassergas-Shiftreaktion im Steigrohr (3) unter Kühlung, bevorzugt bei Temperaturen von anfangs 700°C bis 380°C am Ende, und/oder in einem, bevorzugt koaxial, an das Steigrohr (3) anschließenden Konverterrohr (27) mit im Vergleich zum Steigrohr (3) vergrößertem Durchmesser erfolgt, wobei das Konverterrohr (27) bevorzugt aus einer Legierung aus Eisen, Cobalt, Molybdän und/oder Chrom besteht, wobei bevorzugt dem Steigrohr (3) Wasser und/oder Wasserdampf zugeführt werden.

16. Verfahren nach Anspruch 14 oder 15, **dadurch gekennzeichnet, dass** CO₂ im Synthesegas gemessen und die Zugabe von Altstoffen erhöht wird, wenn der CO₂-Gehalt im Synthesegas größer als 2 Vol.-% ist.

17. Verfahren nach einem der Ansprüche 14 bis 16, **dadurch gekennzeichnet, dass** die Konvertierung des Synthesegases im Konverterrohr (27) in einer Wirbelschicht (28) aus Stahlwerksstaub und/oder in einem keramischen Tiefbettfilter erfolgt.

18. Verfahren nach einem der Ansprüche 14 bis 17, **dadurch gekennzeichnet, dass** feststoffliche Anteile mittels eines an das Steigrohr (3) anschließenden Gaszyklons (11) und/oder Schlauchfilters (12) abgetrennt werden, wobei bevorzugt Feinstaub, insbesondere Schwermetall-Feinstaub, aus dem Gaszyklon (11) und/oder dem Schlauchfilter (12) dem Steigrohr (3) und/oder dem Konverterrohr (27) rückgeführt wird.

19. Verfahren nach einem der Ansprüche 14 bis 18, **dadurch gekennzeichnet, dass** dem Steigrohr (3) und/oder dem Konverterrohr (27) Alkalien und/oder Erdalkalien zugeführt werden.

## Claims

1. Device (1) for utilising process gas with conversion of waste materials and formation of synthesis gas, the device (1) comprising at least one riser pipe (3) formed along an axial direction (4) and arranged vertically, a feed line (5) for the process gas opening into the riser pipe (3) and an exhaust gas treatment system (6) connected to the riser pipe (3) as well as a feeding device (7) for the waste materials with at least one conveying pipe (16) projecting over a defined length (L) into the riser pipe (3), wherein the at least one conveying pipe (16) comprises an open end (17) opening into the riser pipe (3) and the feed line (5) opens into the riser pipe (3) in the axial direction (4) below the open end (17), so that the process gas entering the riser pipe (3) from the feed line (5) can flow around the at least one conveying pipe (16), **characterised in that** the at least one conveying pipe (16) comprises a conveying device (22) at an end (23) facing away from the open end (17) in the form of a conveying screw arranged in the conveying pipe, a piston slide and/or a thick-flow pump, wherein preferably the at least one conveying pipe (16) comprises a widening towards the open end (17), wherein the widening is preferably conical or curved.

2. Device according to claim 1, **characterised in that** the feeding device (7) is formed by a plurality of conveying pipes (16) projecting radially or tangentially into the riser pipe (3), the conveying pipes (16) preferably being directed obliquely upwards with respect to the axial direction (4), or **in that** the feeding device (7) is formed by a conveying pipe (16) projecting at a lower end of the riser pipe (3) in the axial direction (4), in particular concentrically, into the riser pipe (3).

3. Device according to claim 1 or 2, **characterised in that** the at least one conveying pipe (16) comprises fins (25) extending radially into the interior of the conveying pipe (16) and preferably the at least one conveying pipe (16) comprises an axially mounted rotor (26).

4. Device according to one of claims 1 to 3, **characterised in that** the at least one conveying pipe (16) comprises a refractory casing (24).

5. Device according to one of claims 1 to 4, **characterised in that** the at least one conveying pipe (16) is designed for introducing oxygen and/or H₂O into the riser pipe (3), wherein preferably a feed line (18) different from the at least one conveying pipe (16) opens into the riser pipe (3) for oxygen and/or H₂O.

6. Device according to one of claims 1 to 5, **characterised in that** the at least one conveying pipe (16) comprises on its circumference a plurality of pipes (30) which open at the open end (17) of the conveying pipe (16) and are arranged to convey water and/or water vapour to the open end (17).

7. Device according to one of claims 1 to 6, **characterised in that** the at least one conveying pipe (16) in the riser pipe (3) is concentrically surrounded by an outer water vapour line (31).

8. Device according to one of the claims 1 to 7, **characterised in that** an inner water vapour line (32) is arranged concentrically in the at least one conveying pipe (16), the inner water vapour line (32) and the conveying pipe (16) converging outside the riser pipe (3) and the conveying pipe (16) entering the riser pipe (3) overhanging the inner water vapour line (32).

9. Device according to one of claims 1 to 8, **characterised in that** the conveying pipe (16) is connected to a melting container (33) for plastic via a feed line (34), the melting container (33) preferably being pressurised with an inert gas, in particular with nitrogen.

10. Device according to one of claims 1 to 9, **characterised in that** a cooling device (8) is arranged inside the riser pipe (3) in order to cool the gas in the riser pipe (3), the cooling device (8) preferably consisting of an alloy of iron, cobalt, molybdenum and/or chromium and/or **in that** a heating device is arranged inside the riser pipe (3) in order to heat the gas in the riser pipe (3), the heating device preferably consisting of an alloy of iron, cobalt, molybdenum and/or chromium.

11. Device according to one of claims 1 to 10, **characterised in that** the exhaust gas treatment system (6) comprises a gas cyclone (11) and/or a bag filter (12) and preferably a recirculation device (10) for fine dust, in particular heavy metal fine dust, from the gas cyclone (11) and/or the bag filter (12) opens into the riser pipe (3).

12. Device according to one of claims 1 to 11, **characterised in that** between the riser pipe (3) and the exhaust gas treatment system (6) there is arranged a converter pipe (27), preferably coaxially connected to the riser pipe (3), with an enlarged diameter compared to the riser pipe (3), wherein the converter pipe (27) preferably consists of an alloy of iron, cobalt, molybdenum and/or chromium, wherein a gas-permeable tray (29) is preferably arranged between the riser pipe (3) and the converter pipe (27), preferably in the form of a wire mesh, a cross-grid, a perforated plate, a grate or a ceramic deep-bed filter.

13. Device according to claim 12, **characterised in that** a recirculation device (10) for fine dust, in particular heavy metal fine dust, from the gas cyclone and/or the bag filter opens into the converter pipe (27).

14. Method for utilising process gas with conversion of waste materials, in particular wood chips, biomass, waste fractions, waste plastics, waste solvent, shredder light fraction, waste wood and the like, and with formation of synthesis gas, in which method the process gas is fed into a vertically arranged riser pipe (3) formed along an axial direction (4) and the waste materials are pyrolysed by process gas flowing around at least one conveyor pipe (16) of a feeding device (7) and a reaction of the process gas with the pyrolysed waste materials to form synthesis gas takes place in the riser pipe (3), **characterised in that** steel mill dusts are added to the waste materials, in particular in the case of waste plastics, before they enter the conveyor pipe (16), the steel mill dusts preferably being oxidised after their reduction by the addition of steam to form H₂, wherein preferably the conversion of waste materials, in particular wood chips, biomass, waste fractions, waste plastics, shredder light fraction, waste wood takes place with the formation of synthesis gas at process gas temperatures of 700°C to 1800°C, preferably 700°C to 1700°C, more preferably at 700°C to 1600°C.

15. Method according to claim 14, **characterised in that** the conversion of the synthesis gas in the sense of a water-gas shift reaction takes place in the riser pipe (3) with cooling, preferably at temperatures of initially 700°C to 380°C at the end, and/or in a converter pipe (27), preferably coaxial, connected to the riser pipe (3) with an increased diameter compared to the riser pipe (3), wherein the converter pipe (27) is preferably composed of an alloy of iron, cobalt, molybdenum and/or chromium, wherein water and/or steam are preferably supplied to the riser pipe (3).

16. Method according to claim 14 or 15, **characterised in that** CO₂ in the synthesis gas is measured and the addition of waste materials is increased if the CO₂ content in the synthesis gas is greater than 2% by volume.

17. Method according to one of claims 14 to 16, **characterised in that** the conversion of the synthesis gas in the converter pipe (27) takes place in a fluidised bed (28) of steel mill dust and/or in a ceramic deep-bed filter.

18. Method according to one of claims 14 to 17, **characterised in that** solid components are separated by means of a gas cyclone (11) and/or bag filter (12) connected to the riser pipe (3), fine dust, in particular heavy metal fine dust, being preferably returned from the gas cyclone (11) and/or the bag filter (12) to the riser pipe (3) and/or the converter pipe (27).

19. Method according to one of claims 14 to 18, **characterised in that** alkalis and/or alkaline earths are fed to the riser pipe (3) and/or the converter pipe (27).

## Revendications

1. Dispositif (1) pour la valorisation d'un gaz de processus en transformant des substances usagées et en formant un gaz de synthèse, ce dispositif (1) comprenant au moins
un tube ascendant (3) réalisé le long d'une direction axiale (4) et disposée verticalement, une conduite d'alimentation (5) débouchant dans le tube ascendant (3), pour le gaz de processus, et un système de traitement de gaz (6) se raccordant au tube ascendant (3) ainsi qu'un dispositif de distribution (7) pour les substances usagées, avec au moins un tube de transport (16) dépassant d'une longueur (L) définie dans le tube ascendant (3), dans lequel l'au moins un tube de transport (16) comprend une extrémité ouverte (17) s'ouvrant dans le tube ascendant (3) et la conduite d'alimentation (5) débouche, dans la direction axiale (4), en dessous de l'extrémité ouverte (17), dans le tube ascendant (3), de sorte que l'au moins un tube de transport (16) peut être contourné par le gaz de processus entrant de la conduite d'alimentation (5) dans le tube ascendant (3), **caractérisé en ce que** l'au moins un tube de transport (16) comprend, au niveau d'une extrémité (23) opposée à l'extrémité ouverte (17), un dispositif de transport (22) sous la forme d'une vis sans fin de transport disposée dans le tube de transport, d'un tiroir à piston et/ou d'une pompe à haut débit, dans lequel, de préférence, l'au moins un tube de transport (16) présente, en direction de l'extrémité ouverte (17), un élargissement, dans lequel l'élargissement est de préférence conique ou incurvé.

2. Dispositif selon la revendication 1, **caractérisé en ce que** le dispositif de distribution (7) est constitué d'une pluralité de tubes de transport (16) dépassant de manière radiale ou tangentielle dans le tube ascendant (3), dans lequel les tubes de transport (16) sont orientés de préférence de manière inclinée vers le haut par rapport à la direction axiale (4) ou **en ce que** le dispositif de distribution (7) est constitué d'un tube de transport (16) dépassant, à une extrémité inférieure du tube ascendant (3) dans la direction axiale (4), plus particulièrement de manière concentrique, dans le tube ascendant (3).

3. Dispositif selon la revendication 1 ou 2, **caractérisé en ce que** l'au moins un tube de transport (16) comprend des lamelles (25) s'étendant radialement à l'intérieur du tube de transport (16) et de préférence l'au moins un tube de transport (16) comprend un rotor (26) logé axialement.

4. Dispositif selon l'une des revendications 1 à 3, **caractérisé en ce que** l'au moins un tube de transport (16) présente un revêtement ignifuge (24).

5. Dispositif selon l'une des revendications 1 à 4, **caractérisé en ce que** l'au moins un tube de transport (16) est conçu pour l'introduction d'oxygène et/ou de H₂O dans le tube ascendant (3), dans lequel, de préférence, une conduite d'alimentation (18) pour l'oxygène et/ou H₂O, différente de l'au moins un tube de transport (16), débouche dans le tube ascendant (3).

6. Dispositif selon l'une des revendications 1 à 5, **caractérisé en ce que** l'au moins un tube de transport (16) comprend, sur sa circonférence, une pluralité de tubes (30) débouchant au niveau de l'extrémité ouverte (17) du tube de transport (16), qui sont conçus pour le transport d'eau et/ou de vapeur d'eau vers l'extrémité ouverte (17).

7. Dispositif selon l'une des revendications 1 à 6, **caractérisé en ce que** l'au moins un tube de transport (16) dans le tube ascendant (3) est entouré de manière concentrique par une conduite de vapeur d'eau externe (31).

8. Dispositif selon l'une des revendications 1 à 7, **caractérisé en ce que**, dans l'au moins un tube de transport (16), est disposée, de manière concentrique, une conduite de vapeur d'eau interne (32), dans lequel la conduite de vapeur d'eau interne (32) et le tube de transport (16) convergent à l'extérieur du tube ascendant (3) et le tube de transport (16) entre dans le tube ascendant (3) en dépassant de la conduite de vapeur d'eau interne (32).

9. Dispositif selon l'une des revendications 1 à 8, **caractérisé en ce que** le tube de transport (16) est relié, par l'intermédiaire d'une conduite d'alimentation (34), avec un récipient de fusion (33) pour matière plastique, dans lequel, de préférence, le récipient de fusion (33) est alimenté en pression avec un gaz inerte, plus particulièrement de l'azote.

10. Dispositif selon l'une des revendications 1 à 9, **caractérisé en ce que**, à l'intérieur du tube ascendant (3), est disposé un dispositif de refroidissement (8) afin de refroidir le gaz dans le tube ascendant (3), dans lequel le dispositif de refroidissement (8) est constitué de préférence d'un alliage de fer, de cobalt, de molybdène et/ou de chrome et/ou **en ce que**, à l'intérieur du tube ascendant (3), est disposé un dispositif de chauffage, afin de chauffer le gaz dans le tube ascendant (3), dans lequel le dispositif de chauffage est constitué de préférence d'un alliage de fer, de cobalt, de molybdène et/ou de chrome.

11. Dispositif selon l'une des revendications 1 à 10, **caractérisé en ce que** le système de traitement de gaz d'échappement (6) comprend un cyclone à gaz (11) et/ou un filtre à manchon (12) et de préférence un dispositif de retour (10) pour les poussières fines, plus particulièrement pour les poussières fines de métaux lourds, débouche du cyclone à gaz (11) et/ou du filtre à manchon (12) dans le tube ascendant (3).

12. Dispositif selon l'une des revendications 1 à 11, **caractérisé en ce que**, entre le tube ascendant (3) et le système de traitement de gaz d'échappement (6), est disposé un tube convertisseur (27) se raccordant, de préférence de manière coaxiale, au tube ascendant (3), avec un diamètre agrandi par rapport au tube ascendant (3), dans lequel le tube convertisseur (27) est constitué de préférence d'un alliage de fer, de cobalt, de molybdène et/ou de chrome, dans lequel, de préférence, entre le tube ascendant (3) et le tube convertisseur (27), est disposé un fond perméable au gaz (29), de préférence sous la forme d'un réseau de fils, d'un réseau croisé, d'une plaque perforée, d'une grille ou d'un filtre à lit épais céramique.

13. Dispositif selon la revendication 12, **caractérisé en ce qu'**un dispositif de retour (10) pour les poussières fines, plus particulièrement pour les poussières fines de métaux lourds, débouche du cyclone à gaz et/ou du filtre à manchon dans le tube convertisseur (27).

14. Procédé de valorisation d'un gaz de processus en transformant des substances usagées, plus particulièrement des copeaux de bois, de la biomasse, des fractions de déchets, des matières plastiques usagées, des solvants usagés, des fractions légères de broyeurs, du bois usagé et similaires et en formant un gaz de synthèse, le gaz de processus étant, dans ce procédé, conduit vers un tube ascendant (3) réalisé le long d'une direction axiale (4) et disposé verticalement et les substances usagées étant pyrolysées par un gaz de processus contournant au moins un tube de transport (16) d'un dispositif de distribution (7) et, dans le tube ascendant (3), a lieu une transformation du gaz de processus avec les substances usagées pyrolysées en un gaz de synthèse, **caractérisé en ce que**, aux substances usagées, plus particulièrement dans le cas de matières plastiques usagées, sont ajoutées, avant l'entrée dans le tube de transport (16), des poussières d'aciérie, dans lequel, de préférence, les poussières d'aciérie sont oxydées, après leur réduction, par l'ajout de vapeur d'eau en formant du H₂, dans lequel, de préférence, la transformation des substances usagées, plus particulièrement des copeaux de bois, de la biomasse, des fractions de déchets, des matières plastiques usagées, des solvants usagés, des fractions légères de broyeurs, du bois usagé a lieu en formant un gaz de synthèse à des températures de gaz de processus de 700 °C à 1 800 °C, de préférence de 700 °C à 1 700 °C, de préférence de 700 °C à 1 600 °C.

15. Procédé selon la revendication 14, **caractérisé en ce que** la conversion du gaz de synthèse au sens d'une réaction de déplacement du gaz à l'eau dans le tube ascendant (3), a lieu avec un refroidissement, de préférence à des températures de 700 °C au début à 380 °C à la fin et/ou dans un tube convertisseur (27) se raccordant, de préférence de manière coaxiale, au tube ascendant (3), avec un diamètre agrandi par rapport au tube ascendant (3), dans lequel le tube convertisseur (27) est constitué de préférence d'un alliage de fer, de cobalt, de molybdène et/ou de chrome, dans lequel, de préférence, dans le tube ascendant (3), est introduit de l'eau et/ou de la vapeur d'eau.

16. Procédé selon la revendication 14 ou 15, **caractérisé en ce que** le CO₂ dans le gaz de synthèse est mesuré et l'ajout de substances usagées est augmentée lorsque la teneur en CO₂ dans le gaz de synthèse est supérieur à 2 % en volume.

17. Procédé selon l'une des revendications 14 à 16, **caractérisé en ce que** la conversion du gaz de synthèse dans le tube convertisseur (27) a lieu dans une couche de turbulence (28) constituée de poussières d'aciérie et/ou dans un filtre à lit épais céramique.

18. Procédé selon l'une des revendications 14 à 17, **caractérisé en ce que** les parties solides sont séparées au moyen d'un cyclone à gaz (11) se raccordant au tube ascendant (3) et/ou d'un filtre à manchon (12), dans lequel, de préférence, les poussières fines, plus particulièrement les poussières fines de métaux lourds, sont retournées du cyclone à gaz (11) et/ou du filtre à manchon (12) vers le tube ascendant (3) et/ou le tube convertisseur (27).

19. Procédé selon l'une des revendications 14 à 18, **caractérisé en ce que**, dans le tube ascendant (3) et/ou dans le tube convertisseur (27), sont ajoutés des alcalins et/ou des alcalino-terreux.
